# EUROPÄISCHE PATENTSCHRIFT

(11) **EP 1 714 064 B1**
(45) Veröffentlichungstag und Bekanntmachung des Hinweises auf die Patenterteilung: **19.03.2008**
(21) Anmeldenummer: 05701429.2
(22) Anmeldetag: 04.01.2005
(51) Int. Cl.: F16K 31/528, F02B 37/18, F02B 37/013

(54) **BETÄTIGUNGSELEMENT FÜR EINE AUFLADEEINRICHTUNG AN VERBRENNUNGSKRAFTMASCHINEN**
ACTUATING ELEMENT FOR A SUPERCHARGING DEVICE FOR INTERNAL COMBUSTION ENGINES
ELEMENT D'ACTIONNEMENT D'UN DISPOSITIF DE COMPRESSION DE MOTEURS A COMBUSTION INTERNE

(30) Priorität: 30.01.2004 DE 102004005001
(43) Veröffentlichungstag der Anmeldung: 25.10.2006
(73) Patentinhaber: ROBERT BOSCH GMBH, 70442 Stuttgart (DE)
(72) Erfinder: VOGT, Guenther, 83607 Holzkirchen (DE)
(86) Internationale Anmeldenummer: PCT/EP2005/050013
(87) Internationale Veröffentlichungsnummer: WO 2005/073606

(56) Entgegenhaltungen:
- EP-A- 0 684 414
- EP-A- 1 203 872
- US-A- 2 389 947
- US-A- 3 828 808
- US-A- 5 205 125

## Beschreibung

### Technisches Gebiet

An Verbrennungskraftmaschinen kommen Aufladeverfahren zum Einsatz, um die Leistung der Verbrennungskraftmaschine, die direkt proportional dem Luftdurchsatz ist, zu erhöhen. Neben der dynamischen Aufladung, die die Dynamik der angesaugten Luft ausnutzt, kommt die mechanische Aufladung zum Einsatz, bei der das Aufladegerät direkt vom Motor angetrieben wird. Die Verbrennungskraftmaschine sowie das Aufladegerät haben dabei meist ein festes Übersetzungsverhältnis zueinander. Im Rahmen der mechanischen Aufladung kommen Abgasturbolader zum Einsatz, bei welchen die Energie des Abgases zum Antrieb des Laders ausgenutzt wird. Dabei wird einerseits die Energie ausgenutzt, die bei Saugmotoren infolge des durch den Kurbeltrieb vorgegebenen Expansionsverhältnisses nicht genutzt werden kann, andererseits wird das Abgas beim Verlassen des Motors höher aufgestaut, um die notwendige Verdichterleistung zu erhalten. Im Rahmen der Abgasturbolader kommt die zweistufig geregelte Aufladung zum Einsatz, bei der zwei unterschiedlich große Abgasturbolader in Reihe geschaltet sind.

### Stand der Technik

Aus dem "Kraftfahrtechnischen Taschenbuch", Bosch (Chefredakteur Horst Bauer, 23. aktualisierte und erweiterte Auflage, Braunschweig; Wiesbaden: Vieweg 1999, ISBN 3-528-08376-4, Seiten 445, 466) ist ein Aufladungsverfahren mit zweistufiger Regelung bekannt. Gemäß dieses Aufladungsverfahrens, was an Fahrzeugen eingesetzt werden kann, wird die zweistufig geregelte Aufladung durch eine Reihenschaltung zweier - unterschiedlich großer - Abgasturbolader mit einer Bypass-Regelung und einem Ladeluftkühler realisiert.

Der von den Zylindern der Verbrennungskraftmaschine kommende Abgasmassenstrom strömt zunächst in eine Abgassammelrohrleitung. Von hier aus besteht die Möglichkeit, entweder den gesamten Abgasmassenstrom über eine Hochdruckturbine zu expandieren oder einen Teilmassenstrom über die Bypass-Leitung umzuleiten. Der gesamte Abgasmassenstrom wird dann nochmals von der nachgeschalteten Niederdruckturbine ausgenutzt. Der gesamte Frischluftmassenstrom wird zunächst durch die Niederdruckstufe vorverdichtet und idealerweise zwischengekühlt. In der Hochdruckstufe erfolgt anschließend eine weitere Verdichtung und eine Ladeluftkühlung. Aufgrund der Vorverdichtung arbeitet der relativ kleine Hochdruckverdichter auf einem höheren Druckniveau, so dass er den erforderlichen Luftmassenstrom durchsetzen kann.

Bei kleineren Drehzahlen der Verbrennungskraftmaschine, d.h. dem Vorliegen eines kleinen Abgasmassenstromes, bleibt der Bypass vollständig geschlossen und der gesamte Abgasmassenstrom expandiert über die Hochdruckturbine. Dadurch ergibt sich ein sehr schneller und hoher Ladedruckaufbau. Mit zunehmender Drehzahl der Verbrennungskraftmaschine wird die Expansionsarbeit kontinuierlich zur Niederdruckturbine verlagert, indem der Bypass-Querschnitt entsprechend vergrößert wird. Die zweistufig geregelte Aufladung einer Verbrennungskraftmaschine ermöglicht damit eine stufenlose Anpassung auf der Turbinen- und der Verdichterseite an die Erfordernisse des Motorbetriebes.

Zur Verzweigung des Abgasmassenstromes im zweistufig erfolgenden Aufladeverfahren, wie oben skizziert, können einseitig aufgehängte Klappen eingesetzt werden, wie sie von "Waste Gate"-Turboladern bekannt sind.

Die aufgehängten Klappen ermöglichen gering Produktionskosten, da die Fertigung weitestgehend optimiert ist. Im Allgemeinen wird die Ansteuerung einer aufgehängten Klappe über eine pneumatische Steuerdose realisiert, welche unmittelbar an einen Hebel auf der Außenseite des Gehäuses des Abgasturboladers angelenkt wird. Durch den konstanten Hebelarm wird bei festem Steuerdosenweg ein festgelegter Winkelbereich überstrichen. Beim Schließen der aufgehängten Klappe können hohe Stellkräfte auftreten, da die Klappe durch den anliegenden Abgasdruck in Öffnungsrichtung bewegt wird. Dies bedeutet, dass einerseits entweder hohe Kräfte auf die Steuerdose aufgebracht werden müssen oder andererseits lange Stellwege vorgehalten werden müssen, um so einen großen Hebelarm auf der Klappenwelle zu realisieren. Beides bedeutet große Steuervolumina und damit beschränkte Stellgeschwindigkeiten sowie hohe Nachfolgekosten durch eventuell brachliegende Sicherheitsreserven. Weiterhin sind die Einbauverhältnisse in den meisten Fällen ungünstig, da aufgrund herrschender Entwicklungstendenzen im Automobilbereich der im Motorraum zu Verfügung stehende Bauraum stets geringer wird.

Das Unterdrucksystem eines Kraftfahrzeuges muss außerdem die notwendigen Volumina bereithalten, ohne dass sicherheitsrelevante Funktionen, wie zum Beispiel ein Bremskraftverstärker, davon betroffen sind.

Weiterhin ist aus der EP 0 684 414 A1 eine Einrichtung zur Betätigung eines Steuerelementes bekannt, welches eine Fläche aufweist, mit der eine ein gasförmiges Medium führende Leitung freigebbar oder verschließbar ist, wobei das über die Einrichtung betätigbare Steuerelement mittels eines Stellers bewegbar ist. An einem Stellglied des Stellers ist ein Übertragungsglied mit einem Führungsbolzen aufgenommen, der von einem um eine Gelenkstelle verschwenkbaren Stützelement geführt ist, welches starr mit einem das Steuerelement betätigenden Kulissenhebel verbunden ist.

### Darstellung der Erfindung

Durch die erfindungsgemäße Lösung wird eine wie oben aufgeführte, den bisher bekannten Lösungen gemäß des Standes der Technik abhelfende Lösung bereitgestellt. Der die Steuerdose aufnehmende Halter und eine Grundplatte werden miteinander verschweißt und nehmen die Steuerdose auf. Ein Kulissenhebel wird an der ein Steuerelement betätigende Welle montiert. Mit Hilfe eines Gelenkkopfes erfolgt eine Verbindung zur Kolbenstange, die aus der Steuerdose ein- beziehungsweise ausfährt. Ein Führungsbolzen bewegt sich in einem Langloch des Kulissenhebels und wird durch einen Stützhebel geführt, dessen Gegenlager auf der Grundplatte mit dem Stützbolzen fixiert ist. Über die abrollbar ausgebildete Führungshülse werden die Kräfte auf den Kulissenhebel übertragen.

Durch das Verschieben des Führungsbolzens auf dem Kulissenhebel wird der Hebelarm gegenüber dem klappenförmigen Steuerelement verlängert beziehungsweise verkürzt. Damit ist es möglich, positionsabhängig unterschiedliche Momente auf das Steuerelement zu übertragen. In einer ersten Position erfolgt über die Aufnahme der Seitenkräfte durch den Stützhebel eine Hemmung der Öffnungsbewegung des Steuerelementes. Die Öffnungsbewegung kann durch auf das Steuerelement wirkende Störkräfte ungewollt auftreten. Durch die erfindungsgemäße Lösung kann bei hohen Drücken gegen das geschlossene Steuerelement dessen ungewollte Öffnung bereits durch Aufbau geringer Stellkräfte verhindert werden.

In einer weiteren Position kann über einen kleinen Hebelarm auf der Klappenwelle ein großer Verstellwinkel herbeigeführt werden. Dadurch lässt sich ein großer Öffnungswinkel des Steuerelements in solchen Bereichen erreichen, wo nur noch geringere Änderungen des Strömungswiderstandes in Bezug auf den Klappenwinkel auftreten.

Aufgrund der geringen Reibung, die bei der Abrollbewegung gemäß der vorgeschlagenen Lösung auftritt, ist die Hysterese des vorgeschlagenen Systems extrem niedrig.

Aufgrund der durch die erfindungsgemäße Lösung erheblich herabgesetzten Betätigungskräfte kann eine pneumatische Steuerdose, wie sie derzeit eingesetzt wird, durch einen alternativen Steller, wie zum Beispiel einen elektrischen Stellantrieb, ersetzt werden.

### Zeichnung

Anhand der Zeichnung wird die Erfindung nachstehend eingehender beschrieben.

Es zeigt
- Figur 1: einen teilweise aufgeschnitten dargestellten Abgasturbolader mit Turbinenteil und Verdichterteil,
- Figur 2: die Kinematik der Ansteuerung eines Steuerungselementes, wobei das Steuerelement in eine Schließposition gestellt ist,
- Figur 3: die in Figur 2 dargestellte Kinematik in einer Öffnungsposition des Steuerelementes und
- Figur 4: die Kinematik zur Betätigung des Steuerelementes gemäß der Figuren 2 und 3 in einer Vorderansicht

### Ausführungsvarianten

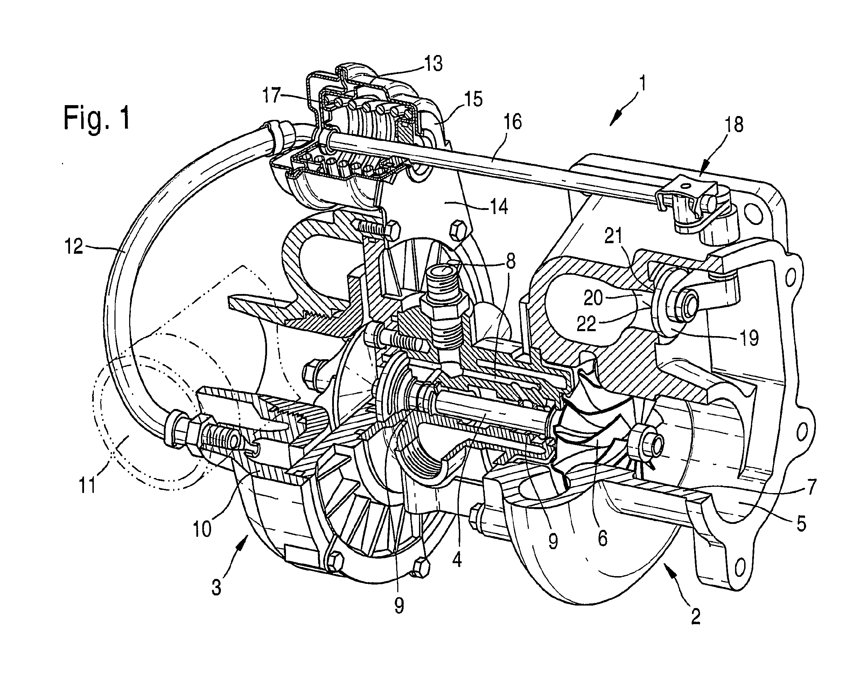

Der Darstellung gemäß Figur 1 ist in teilweise aufgebrochener Ansicht ein Abgasturbolader zu entnehmen.

Der in Figur 1 dargestellte Abgasturbolader 1 umfasst ein Turbinenteil 2 und ein Verdichterteil 3. Der in Figur 1 dargestellte Abgasturbolader 1 lässt sich zum Beispiel an Verbrennungskraftmaschinen von Personenkraftfahrzeugen, Nutzfahrzeugen oder anderen Verbrennungskraftmaschinen einsetzen. Über einen Abgaseintritt 5 wird ein Turbinenrad 6 mit Abgas beaufschlagt und wird durch das Abgas in Rotation versetzt. Das Turbinenrad 6 sitzt drehfest auf einer Abgasturboladerwelle 4, auf der ein Verdichterlaufrad aufgenommen ist. Das Turbinenrad 6 wird von einem Turbinengehäuse 7 aufgenommen, in welchem eine Bypass-Leitung 20 ausgebildet ist. Die Bypass-Leitung 20 ist durch ein Steuerelement 19, welches in der Darstellung gemäß Figur 1 klappenförmig ausgebildet ist, freigebbar oder verschließbar. Bei einer mehrstufigen Aufladung einer Verbrennungskraftmaschine kann über die Bypass-Leitung 20 ein Teilstrom des Abgases einem weiteren Abgasturbolader 1 zugeführt werden, der in der Darstellung gemäß Figur 1 nicht dargestellt ist. Um den Abgasteilstrom, der dem weiteren Abgasturbolader aufgegeben wird, zu steuern, wird das Steuerelement 19 mittels einer am Abgasturbolader 1 angeordneten Steuerdose 13 betätigt.

Das Turbinengehäuse 7 des Abgasturboladers 1 ist mit einem Verdichtergehäuse 10 verbunden. Durch die beiden Gehäuse 7 beziehungsweise 10 erstreckt sich die Abgasturboladerwelle 4, der eine Schmiermedium-Versorgung 8 zugeordnet ist, um einen reibungsarmen Lauf der Abgasturboladerwelle 4 im Betrieb des Abgasturboladers 1 zu gewährleisten. Über die Schmiermedium-Versorgung 8 werden die Wellenlager 9, bei denen es sich bevorzugt um Gleitlager handelt, mit Schmiermedium versorgt, so dass sich an dem Wellenlagern 9 zwischen der Mantelfläche der Abgasturboladerwelle 4 und den Lagerstellen ein Schmierfilm ausbildet Über das auf der Abgasturboladerwelle 4 angeordnete Verdichterlaufrad, welches durch Abgasbeaufschlagung des Turbinenrades 6 in Rotation versetzt wird, wird Luft verdichtet und einem Ladeluftaustritt 11 zugeführt. Die vorverdichtete Ladeluft wird zur Verbesserung der Zylinderfüllung dem hier nicht dargestellten Ansaugtrakt einer Verbrennungskraftmaschine zugeführt.

Am Verdichtergehäuse 10 des Abgasturboladers 1 ist ein Abzweig 12 vorgesehen. *Über den Abzweig 12 lässt sich die in* *Figur 1* *dargstellte Steuerdose 13 mit Überdruck beaufschlagen, so dass eine Betätigung des Steuerelementes 19 über eine überdruckbeaufschlagte Steuerdose 13 erfolgen kann. Daneben kann die in* *Figur 1* *dargestellte Steuerdose 13 auch über eine Unterdruckbeaufschlagung betätigt werden, die beispielsweise an Kraftfahrzeugen mit selbstzündenden Verbrennungskraftmaschinen vorgesehen ist.*

Über den Abzweig 12 steht das Verdichtergehäuse 10 des Abgasturboladers 1 mit der an diesem angeflanschten Steuerdose 13 in Verbindung. Die Steuerdose 13 ist mittels eines Flansches 15 am Verdichtergehäuse 10 befestigt. Innerhalb des Gehäuses der Steuerdose 13 ist ein Federelement 17 angeordnet, welches in der Darstellung gemäß Figur 1 als Spiralfeder ausgebildet ist. Durch die Unterdruck/Überdruck-Beaufschlagung der Steuerdose 13 wird eine Kolbenstange 16 translatorisch bewegt.

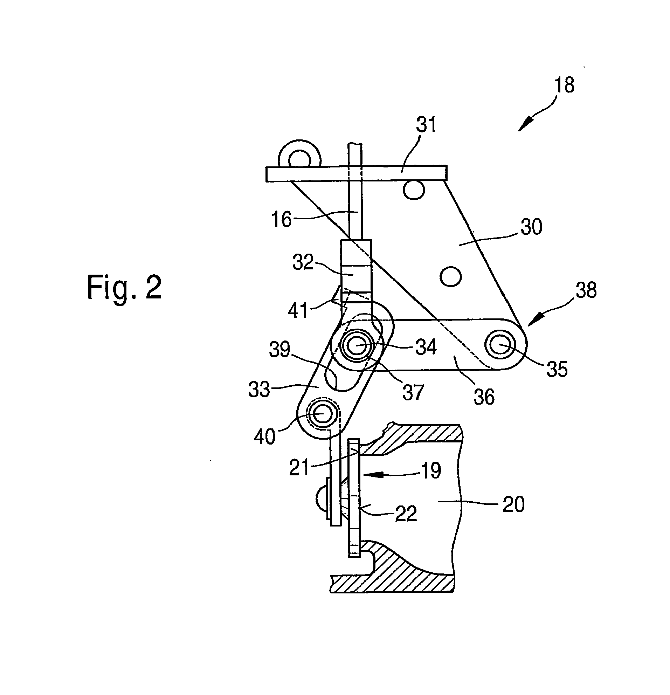

Über die Kolbenstange 16 wird eine Umlenkeinrichtung 18 betätigt. Die Umlenkeinrichtung 18 umfasst ein in den Figuren 2, 3 und 4 näher beschriebenes Hebelsystem, mittels dessen das beispielsweise klappenförmig ausbildbare Steuerelement 19 in eine Öffnungsstellung beziehungsweise eine Schließstellung oder eine betriebsabhängige Zwischenstellung stellbar ist

Das Steuerelement 19 gemäß der Darstellung in Figur 1 ist rotationssymmetrisch als kreisrunde Klappe ausgebildet und liegt im Schließzustand an einer Anlagefläche 21 an der Stirnseite der Bypass-Leitung 20 im Turbinenteil 2 des Abgasturboladers 1 an. In der Schließstellung ist die Bypass-Leitung 20 zur Abgasbeaufschlagung eines weiteren Abgasturboladers mit Abgas der Verbrennungskraftmaschine verschlossen. Die Klappenfläche 22 des klappenförmig ausbildbaren Steuerelementes 19 ist so dimensioniert, dass bei Anlage des Steuerelementes 19 an der Anlagefläche 21 ein vollständiges Verschließen der Bypass-Leitung 20 zu einem weiteren Abgasturbolader gewährleistet ist Aufgrund des im Bypass-Kanal 20 des Abgasturboladers 1 herrschenden Abgasvolumenstromes wird die Schließstellung des klappenförmig ausbildbaren Steuerelementes 19 durch die Federkraft der in der Steuerdose 13 aufgenommenen Feder 17 aufgebracht, um ein unbeabsichtigtes Überströmen eines Teilabgasstromes über den Bypass-Kanal 20 in den weiteren, in Figur 1 nicht dargestellten Abgasturbolader zu verhindern. Die Kolbenstange 16 erstreckt sich von der Steuerdose 13, die am Verdichterteil 2 des Abgasturboladers 1 aufgenommen ist, parallel zur Abgasturboladerwelle 4 zum Turbinenteil 2 des Abgasturboladers 1 gemäß der Darstellung in Figur 1.

Figur 2 ist die Betätigungseinrichtung für das Steuerelement in einer ersten Stellposition entnehmbar.

In der Darstellung gemäß Figur 2 ist die Steuerdose 13, über welche die Kolbenstange 16 betätigt wird, nicht näher dargestellt Die Kolbenstange 16 erstreckt sich durch eine Öffnung in einer Grundplatte 31 und weist an ihrem, dem Steuerelement 19 zuweisenden Ende einen Gelenkkopf 32 auf. Der Gelenkkopf 32 kann beispielsweise auf einem Gewindeabschnitt der Kolbenstange 16 aufgeschraubt werden. Am Steuerdosenhalter 31 beziehungsweise 15 ist eine Grundplatte 30 angeschweißt. Die Grundplatte 30 umfasst ein erstes Gelenk 38, an welchem ein Stülzhebel 36 angelenkt ist Dazu ist am ersten Gelenk 38 ein Stützbolzen 35 vorgesehen, der eine Schwenkbewegung des Stützhebels 36 relativ zur Grundplatte 30 ermöglicht.

Am Stützhebel 36 ist an dem dem ersten Gelenk 38 gegenüberliegenden Ende ein Führungsbolzen 34 gelagert. Der Führungsbolzen 34 ist einerseits am Gelenkkopf 32 aufgenommen und durchsetzt andererseits eine bevorzugt als Langloch ausgebildete Kulisse 39 im Kulissenhebel 33. Der Führungsbolzen 34 umfasst eine Führungshülse 37, die drehbar am Führungsbolzen 34 aufgenommen ist. Die Führungshülse 37 rollt mit ihrer Umfangsfläche auf der Innenseite der Kulisse 39 im Kulissenhebel 33 ab. Am einem Ende des Kulissenhebels 33 befindet sich ein Klappenlager 40, an welchem das beispielsweise als kreisrunde Steuerklappe ausgebildete Steuerelement 19 befestigt ist. Am Kulissenhebel 33 ist ferner ein Wegbegrenzer 41 aufgenommen, der in der Position des Kulissenhebels 33 gemäß der Darstellung in Figur 2 *über den* Gelenkkopf 32 *gefahren ist.* Der Kulissenhebel 33 durchsetzt die Wandung der Bypass-Leitung 20 teilweise. Mittels der am Führungsbolzen 34 gelagerten, drehbar angeordneten Führungshülse 37 werden die Stellkräfte der Kolbenstange 16 an den Kulissenhebel 33 und damit an das Steuerelement 19 zum Öffnen beziehungsweise Verschließen der Bypass-Leitung 20 im Turbinenteil 2 des Abgasturboladers 1 gemäß der Darstellung in Figur 1 übertragen.

In der Darstellung gemäß Figur 2 liegt der Stützhebel 36 parallel zum Steuerdosenhalter 31. Der in der Kulisse 39 verfahrbare Führungsbolzen 34 samt Führungshülse 37 ist in Bezug auf die Längserstreckung der Kulisse 39 nach oben gestellt, wodurch das Steuerelement 19 an der Anlagefläche 21 der Bypass-Leitung 20 im Turbinenteil 2 des Abgasturboladers 1 anliegt und die Bypass-Leitung 20 demzufolge verschließt

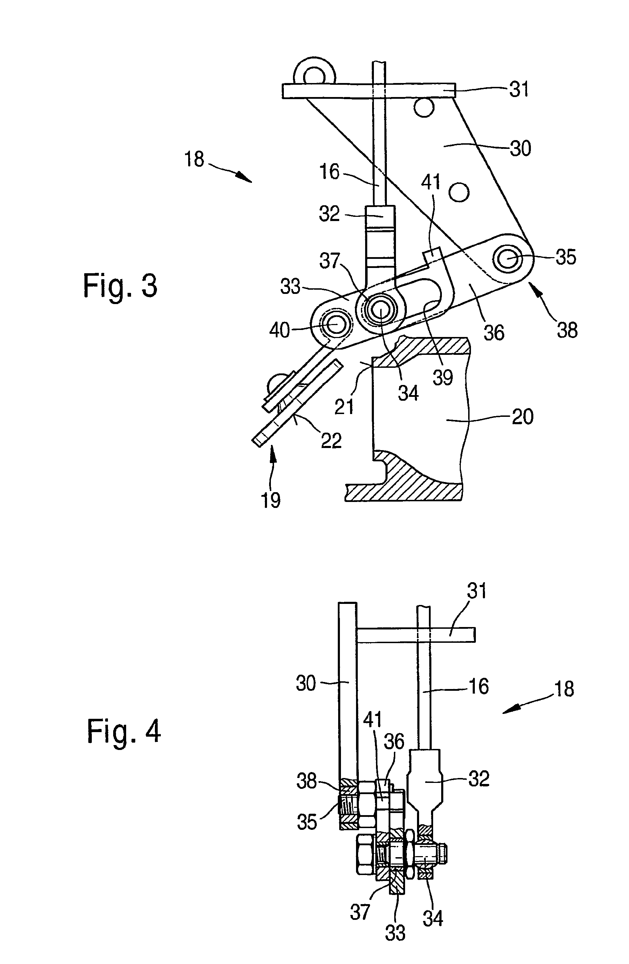

Aus der Darstellung gemäß Figur 3 ist die Kinematik der Betätigungseinrichtung zu entnehmen, wobei das über diese betätigte Steuerelement in seine Öffnungsstellung gefahren ist

Im Gegensatz zur Darstellung gemäß Figur 2 ist die Kolbenstange 16 aus der in Figur 3 nicht dargestellten Steuerdose 13 (vgl. Darstellung gemäß Figur 1) ausgefahren. Demzufolge ist der Gelenkkopf 32, der mit der Kolbenstange 16 verbunden ist, in Richtung auf die Bypass-Leitung 20 ausgefahren. Bei der Ausfahrbewegung der Kolbenstange 16 aus der Steuerdose 13 wird aufgrund der Kopplung des Führungsbolzens 34 mit dem Gelenkkopf 32 die am Fühmngsbolzen 34 aufgenommene Führungshülse 37 samt Führungsbolzen 34 innerhalb der Kulisse 39 des Kulissenhebels 33 verschoben. Da der Führungsbolzen 34 zudem am Stützhebel 36 aufgenommen ist, prägt die Ausfahrbewegung der Kolbenstange 16 aus der Steuerdose 13 in vertikale Richtung auf den Bypass-Kanal 20 zu, im Kulissenhebel 33 eine Schwenkbewegung im Uhrzeigersinn auf. Die Schwenkbewegung des Kulissenhebels 33 wird - wie in Figur 3 dargestellt - durch Anlage des Wegbegrenzers 41 an einer Seitenfläche des Stützhebels 36 begrenzt. Während der Schwenkbewegung des Kulissenhebels 33 im Uhrzeigersinn wird das als Steuerklappe ausbildbare Steuerelement 19 ebenfalls im Uhrzeigersinn um den Führungsbolzen 34 gedreht und nimmt seine in Figur 3 dargestellte Öffnungsstellung an. In der in Figur 3 dargestellten Position des kreisrund ausbildbaren Steuerelementes 19 ist der Austrittsquerschnitt der Bypass-Leitung 20 durch das Steuerelement 19 freigegeben. Ein Abgasteilstrom oder ein anderes gasförmiges Medium vermag nun den freigegebenen Bypass-Kanal 20 zu durchströmen und zum Beispiel einem dem in Figur 1 in Reihe nachgeschalteten weiteren Abgasturbolader zuzuströmen.

Aus der Darstellung gemäß Figur 3 geht hervor, dass die Kulisse 39 in der Öffnungsstelle des kreisrund ausbildbaren Steuerelementes 19 eine nahezu horizontale Lage annimmt. Der Stützhebel 36 ist am ersten Gelenk 38 um den Stützbolzen 35 aus seiner Parallellage zum Steuerdosenhälter 31 ausgelenkt.

Eine Beeinflussung des Stellweges in Bezug auf den Schwenkweg des kreisrund ausbildbaren Steuerelementes 19 kann beispielsweise durch eine Verstellung des Gelenkkopfes 32 am Endabschnitt der aus der Steuerdose 13 ausfahrenden Kolbenstange 16 erreicht werden. Somit lässt sich eine Justage der Öffnungs- beziehungsweise der Schließposition des kreisrunden Steuerelementes 19 herbeiführen als auch eine Feineinstellung des Stellweges, welchen das kreisrund ausbildbare Steuerelement 19 von seiner Schließstellung (vgl. Darstellung gemäß Figur 2) in seine Öffnungsstellung (vgl. Darstellung gemäß Figur 3) ausführt.

Der Darstellung gemäß Figur 4 ist entnehmbar, dass der Gelenkkopf 32 einen schalenförmig ausgebildeten Lagerkörper zur Aufnahme des Führungsbolzens 34 aufweist. Am Führungsbolzen 34 ist im Bereich der Kulisse 39 die Führungshülse 37 verdrehbar aufgenommen. Der Führungsbolzen 34 durchsetzt ferner den Stützhebel 36 und kann an diesem beispielsweise über eine Schraube oder dergleichen gesichert werden. Die drehbar am Führungsbolzen 34 aufgenommene Führungshülse 37 rollt mit ihrer Mantelfläche an der Innenseite der Kulisse 39 ab und zwingt dem Kulissenhebel 33 ihrerseits die Schwenkbewegung im Uhrzeigersinn von der Schließstellung des Steuerelementes 19 gemäß der Darstellung in Figur 2 in dessen Öffnungsstellung (vgl. Darstellung gemäß Figur 3) auf. Der Stützhebel 36 ist ferner über den Stützbolzen 35 an der Grundplatte 30 aufgenommen, wobei sichergestellt ist, dass der Stützhebel 36 durch Zwischenschaltung einer Lagerschale relativ zum Stützbolzen 35 des ersten Gelenkes 38 verschwenkbar ist. Der Vollständigkeit halber sei erwähnt, dass am unteren Ende des Kulissenhebels 33 (vgl. Bezugszeichen 40) der Träger für das Steuerelement 19 befestigt ist

Mit der in den Figuren 2, 3 und 4 näher dargestellten Betätigungseinrichtung 18 kann über das Verschieben des Führungsbolzens 34 innerhalb der Kulisse 39 des Kulissenhebels 33 der Hebelarm in Bezug auf das Steuerelement 19 verlängert beziehungsweise verkürzt werden. Dadurch lassen sich abhängig von der Position des Kulissenhebels 33 unterschiedliche Momente auf das Steuerelement 19 übertragen. In der in Figur 2 dargestellten Position bewirkt die Aufnahme von Seitenkräften über den Stützhebel 36 eine Hemmung der Öffnungsbewegung des Steuerelementes 19, welches zum Beispiel als kreisrund ausgebildete Klappe ausgebildet werden kann, die eventuell durch Störkräfte auf das Steuerelement 19 ungewollt herbeigeführt werden kann. Diesem Umstand kann bei auftretendem hohen Druck des zu steuernden gasförmigen Mediums, beispielsweise bei Druckpulsationen, die im geschlossenen Zustand des Steuerelementes 19 dessen Öffnen herbeiführen können, mit relativ geringen Stellkräften entgegengewirkt werden.

Bei der in Figur 3 dargestellten Position des Steuerelementes 19 wird durch einen kleinen Hebelarm in Bezug auf die Klappenwelle 40 ein großer Verstellwinkel des Steuerelementes 19 erreicht. Dadurch lassen sich große Öffnungswinkel des klappenförmig ausbildbaren Steuerelementes 19 in Bereichen erreichen, in denen lediglich geringe Änderungen des Strömungswiderstandes, bezogen auf den Öffnungswinkel des Steuerelementes 19, auftreten. Aufgrund der geringen Reibung bei der Abrollbewegung der Führungshülse 37 innerhalb der im Kulissenhebel 33 ausgebildeten Kulisse 39, ist die Hysterese der erfindungsgemäß vorgeschlagenen Betätigungseinrichtung sehr gering. Aufgrund der zur Betätigung der Umlenkeinrichtung 18 relativ geringen Stellkräfte kann eine pneumatische, d.h. *zum Beispiel* eine durch Unterdruckbeauf*schlagung* betätigte Steuerdose 13 auch durch einen alternativen Steller, wie zum Beispiel einen elektrischen Stellantrieb, ersetzt werden. Damit kann ein Unterdruckverbraucher entfallen, so dass der Unterdruck zur Gänze einem sicherheitsrelevanten System am Kraftfahrzeug, wie zum Beispiel dem Bremskraftverstärker, zur Verfügung steht und kein Unterdruck zur Betätigung der Steuerdose 13 eines Abgasturboladers 1 abzuzweigen wäre.

Durch die sehr kompaktbauende Umlenkeinrichtung 18 gemäß der Darstellung in den Figuren 2, 3 und 4 werden lange, Bauraum beanspruchende Stellwege vermieden, die die Stellgeschwindigkeiten negativ beeinflussen. Über die erfindungsgemäß vorgeschlagene Ausbildung der Umlenkeinrichtung 18 können hohe Kräfte aufgebracht werden, die das beispielsweise als Klappe ausbildbare Steuerelement 19 zuverlässig in seiner Schließstellung, d.h. in Anlage an die Anlagefläche 21 der Bypass-Leitung 20, halten, wodurch ein ungewolltes Öffnen des klappenförmig ausbildbaren Steuerelementes 19 zuverlässig verhindert wird.

### Bezugszeichenliste

- 1: Abgasturbolader
- 2: Turbinenteil
- 3: Verdichterteil
- 4: Abgasturboladerwelle
- 5: Abgaseintritt
- 6: Turbinenrad
- 7: Turbinengehäuse
- 8: Schmiermittelversorgung
- 9: Wellenlager
- 10: Verdichtergehäuse
- 11: Ladeluftaustritt
- 12: Abzweig
- 13: Steuerdose
- 14: Trägerplatte
- 15: Gehäusesteuerdose
- 16: Kolbenstange
- 17: Federelement
- 18: Umlenkeinrichtung
- 19: Steuerelement (Klappe)
- 20: Bypass-Leitung
- 21: Anlagefläche Steuerelement
- 22: Klappenfläche
- 30: Grundplatte
- 31: Steuerdosenhalter
- 32: Gelenkkopf
- 33: Kulissenhebel
- 34: Führungsbolzen
- 35: Stützbolzen
- 36: Stützhebel
- 37: Führungshülse
- 38: erstes Gelenk
- 39: Kulisse
- 40: Klappenlager
- 41: Wegbegrenzer

## Patentansprüche

1. Einrichtung (18) zur Betätigung eines Steuerelementes (19), welches eine Fläche (22) aufweist, mit der eine ein gasförmiges Medium führende Leitung (20) freigebbar oder verschließbar ist, insbesondere eine Bypass-Leitung (20) an einer Aufladeeinrichtung (1) einer Verbrennungskraftmaschine, wobei das über die Einrichtung (18) betätigbare Steuerelement (19) mittels eines Stellers (13) bewegbar ist und an einem Stellglied (16) des Stellers (13) ein Führungsbolzen (34) aufgenommen ist, welcher an einem um eine Gelenkstelle (38) verschwenkbaren Stützhebel (36) geführt ist und einem Kulissenhebel (33) eine Schwenkbewegung zur Betätigung des Steuerelementes (19) aufprägt, wobei sich der Führungsbolgen (34) innerhalb der Kulisse (39) des Kulissenhebels (33) verschieben kann, **dadurch gekennzeichnet, dass** der Kulissenhebel (33) und der Stützhebel (36) relativ zueinander bewegbar sind.

2. Einrichtung gemäß Anspruch 1, **dadurch gekennzeichnet, dass** an dem Führungsbolzen (34) eine Führungshülse (37) drehbar aufgenommen ist.

3. Einrichtung gemäß Anspruch 2, **dadurch gekennzeichnet, dass** die Führungshülse (37) des Führungsbolzens (34) in einer Kulisse (39) des Kulissenhebels (33) abrollt.

4. Einrichtung gemäß Anspruch 1, **dadurch gekennzeichnet, dass** am Kulissenhebel (33) das Steuerelement (19) ortsfest aufgenommen ist.

5. Einrichtung gemäß Anspruch 1, **dadurch gekennzeichnet, dass** bei einer Ausfahr- beziehungsweise Einfahrbewegung des Stellgliedes (16) des Stellers (13) der Führungsbolzen (34), der am Stützhebel (36) geführt ist, den Kulissenhebel (33) zwischen einer Schließstellung und einer Öffnungsstellung des Steuerelementes (19) bewegt.

6. Einrichtung gemäß Anspruch 1, **dadurch gekennzeichnet, dass** am Kulissenhebel (33) ein Wegbegrenzer (41) ausgebildet ist, der die maximale Schwenkbewegung des Kulissenhebels (33) um den Führungsbolzen (34) begrenzt.

7. Einrichtung gemäß Anspruch 1, **dadurch gekennzeichnet, dass** ein mit dem Stellglied (16) verbundener Gelenkkopf (32) eine Lagerschale zur Aufnahme des Führungsbolzens (34) aufweist.

8. Einrichtung gemäß Anspruch 1, **dadurch gekennzeichnet, dass** der Steller (13) ein elektromotorisch angetriebener Steller ist.

9. Einrichtung gemäß Anspruch 1, **dadurch gekennzeichnet, dass** der Steller (13) ein elektromagnetisch betätigbarer Steller ist.

## Claims

1. Device (18) for actuating a control element (19) which has a face (22) by means of which a line (20) which conducts a gaseous medium can be opened or closed off, in particular a bypass line (20) on a supercharging device (1) of an internal combustion engine, with the control element (19) which can be actuated by means of the device (18) being movable by means of an adjuster (13) and with a guide bolt (34) being held on an adjusting element (16) of the adjuster (13), which guide bolt (34) is guided on a support lever (36) which is pivotable about a joint point (38) and imparts a pivoting movement to a slotted guide lever (33) in order to actuate the control element (19), with the guide bolt (34) being movable within the slotted guide (39) of the slotted guide lever (33), **characterized in that** the slotted guide lever (33) and the support lever (36) are movable relative to one another.

2. Device according to Claim 1, **characterized in that** a guide sleeve (37) is rotatably held on the guide bolt (34).

3. Device according to Claim 2, **characterized in that** the guide sleeve (37) of the guide bolt (34) rolls in a slotted guide (39) of the slotted guide lever (33).

4. Device according to Claim 1, **characterized in that** the control element (19) is positionally fixedly held on the slotted guide lever (33).

5. Device according to Claim 1, **characterized in that**, during an extension or retraction movement of the adjusting element (16) of the adjuster (13), the guide bolt (34) which is guided on the support lever (36) moves the slotted guide lever (33) between a closed position and an open position of the control element (19).

6. Device according to Claim 1, **characterized in that** a travel limiter (41) is formed on the slotted guide lever (33), which travel limiter (41) limits the maximum pivoting movement of the slotted guide lever (33) about the guide bolt (34).

7. Device according to Claim 1, **characterized in that** a joint head (32) which is connected to the adjusting member (16) has a bearing shell for holding the guide bolt (34).

8. Device according to Claim 1, **characterized in that** the adjuster (13) is an electromotively driven adjuster.

9. Device according to Claim 1, **characterized in that** the adjuster (13) is an electromagnetically actuable adjuster.

## Revendications

1. Installation (18) pour actionner un élément de commande (19) ayant une surface (22) permettant de libérer ou de fermer une conduite (20) traversée par un milieu gazeux, notamment une conduite de dérivation (20) d'une installation de suralimentation (20) d'un moteur à combustion interne,
l'élément de commande (19) actionné par l'installation (18) étant déplacé par un actionneur (13) et un organe de réglage (16) de l'actionneur (13) comporte un goujon de guidage (34) guidé dans un levier d'appui (36) pivotant autour d'un point d'articulation (38) et il applique à un levier à coulisse (33) un mouvement de basculement pour actionner l'élément de commande (19),
le goujon de guidage (34) coulissant dans la coulisse (39) du levier à coulisse (33),
**caractérisée en ce que**
le levier à coulisse (33) et le levier d'appui (36) sont mobiles l'un par rapport à l'autre.

2. Installation selon la revendication 1,
**caractérisée en ce que**
le goujon de guidage (34) reçoit à rotation un manchon de guidage (37).

3. Installation selon la revendication 2,
**caractérisée en ce que**
le manchon de guidage (37) du goujon de guidage (34) roule dans une coulisse (39) du levier à coulisse (33).

4. Installation selon la revendication 1,
**caractérisée en ce que**
l'élément de commande (19) est reçu de manière fixe dans le levier à coulisse (33).

5. Installation selon la revendication 1,
**caractérisée en ce que**
lors du mouvement de déploiement ou de rentrée de l'organe d'actionnement (16) de l'actionneur (13), le goujon de guidage (34) est guidé sur le levier d'appui (36) et déplace le levier à coulisse (33) entre une position de fermeture et une position d'ouverture de l'élément de commande (19).

6. Installation selon la revendication 1,
**caractérisée par**
un limiteur de course (41) réalisé sur le levier à coulisse (33) qui limite le mouvement de basculement maximum du levier à coulisse (33) autour du goujon de guidage (34).

7. Installation selon la revendication 1,
**caractérisée en ce qu'**
une tête d'articulation (32) reliée à l'organe d'actionneur (16) comporte une coupelle de palier pour recevoir le goujon de guidage (34).

8. Installation selon la revendication 1,
**caractérisée en ce que**
l'actionneur (13) est un actionneur à moteur électrique.

9. Installation selon la revendication 1,
**caractérisée en ce que**
l'actionneur (13) est un actionneur à commande électromagnétique.
